# EUROPÄISCHE PATENTSCHRIFT

(11) **EP 0 820 833 B1**
(45) Veröffentlichungstag und Bekanntmachung des Hinweises auf die Patenterteilung: **09.06.1999**
(21) Anmeldenummer: 97890136.1
(22) Anmeldetag: 14.07.1997
(51) Int. Cl.: B23K 37/02, B23K 7/10

(54) **Vorrichtung zum Ausschneiden und Einschweissen von Blechronden in ein Blech**
Device for cutting and welding a round in a plate
Dispositif pour découper et souder un rond dans une tôle

(30) Priorität: 23.07.1996 AT 132996
(43) Veröffentlichungstag der Anmeldung: 28.01.1998
(73) Patentinhaber: BERNDORF BAND GesmbH, A-2560 Berndorf (AT)
(72) Erfinder:
(74) Vertreter: Widtmann, Georg, Dipl.-Ing. Dr. techn.

(56) Entgegenhaltungen:
- US-A- 3 417 979
- US-A- 4 256 288
- PATENT ABSTRACTS OF JAPAN vol. 096, no. 007, 31.Juli 1996 & JP 08 071791 A (HITACHI ZOSEN CORP), 19.März 1996,
- DATABASE WPI Section Ch, Week 9218 Derwent Publications Ltd., London, GB; Class M23, AN 92-149403 XP002044488 & SU 1 666 286 A (ODESS POLY) , 30.Juli 1991

## Beschreibung

Die Erfindung betrifft eine Vorrichtung zum Ausschneiden und Einschweißen von Blechronden in ein Blech, insbesondere in ein endloses Blechband, z. B. in einer Doppelbandpresse, gemäß dem Oberbegriff des Anspruchs 1.

Bei einer hohen Anzahl von Fertigungseinrichtungen dienen Bleche als Arbeitsflächen. Diese Arbeitsflächen können als Tafeln oder auch als endlose Bänder ihren Einsatz finden. Diese Arbeitsflächen weisen in der Regel eine besonders hohe Gleichmäßigkeit in der Oberfläche auf. Während des Einsatzes im Produktionsprozeß, beispielsweise bei der Herstellung von Spanplatten, Kunststoffplatten bzw. Kunststoffolien u. dgl. mehr, unterliegen die Platten einerseits einer hohen thermischen Beanspruchung, wobei andererseits hoher Druck ausgeübt wird. Durch den Normalbetrieb kann es bereits zu Dehnungen des Bleches kommen. So diese Anormalitäten im Randbereich des Bleches sind, können dieselben ausgeschnitten und durch Einsatz eines entsprechenden Blechstückes wieder instand gesetzt werden. Treten derartige Schäden im inneren Bereich einer Blechplatte bzw. eines endlosen Bleches auf, so muß die fehlerhafte Stelle herausgeschnitten werden und durch Einschweißen eines entsprechenden Einsatzstückes wieder instandgesetzt werden. Diese Einsatzstücke werden als Blechronden bezeichnet, wobei sie in der Regel kreisrund oder auch elliptisch, jedenfalls mit einer stetig verlaufenden Kontur versehen sind, so daß Ecken oder andere Unstetigkeitsstellen vermieden sind. Beim Einschweißen derartiger Blechronden wird wie folgt vorgegangen.

Der zu ersetzende Bereich wird vermessen, um die kleinstmögliche Substitution des Bleches durch eine Blechronde zu ermöglichen. Vorerst wird zentral in dem herauszuschneidenden Bereich ein Loch gebohrt oder herausgebrannt. Um dieses zentrale Loch herum wird entweder über eine Schablone der Verlauf des Trennschnittes angezeichnet oder es kann auch eine Schneideinrichtung, insbesondere ein Plasmaschneider direkt entlang einer Führung, händisch bewegt werden. Nach Herausschneiden des betroffenen Bereiches in prädestinierter Größe wird die Schnittkante entkratet und abgeschliffen. Hierbei muß darauf geachtet werden, daß keine Vergrößerung des Ausschnittes erfolgt. Anschließend wird eine vorgefertigte Blechronde eingeheftet, wobei eine Unterlagsplatte, beispielsweise mit Kupfereinsätzen, an der später zu legenden Schweißnaht die plane Lage der Blechronde sichert. Nach Einheften der Blechronde erfolgt ein Einschweißen mit einem WIG-Handschweißbrenner, wonach gegebenenfalls ein Weichglühen des Schweißbereiches erfolgt. Die Schweißnaht wird sodann kalt geschmiedet und mechanisch auf die Blechdicke abgearbeitet. Nachteilig bei einer derartigen Vorrichtung ist, daß die Führung zum Ausschneiden des schadhaften Bereiches, gegebenenfalls am Blech, wenn auch nur geringfügig verschoben wird, so der Ausschnitt nicht genau der später einzupassenden Blechronde entspricht, und daß eine ungleichmäßige Führung der Schneideinrichtung, insbesondere eines Plasmaschneiders, durch die händische Bewegung bedingt ist, womit Ungleichmäßigkeiten im Schnittbereich auftreten. Weiters ist der Schweißvorgang im hohen Grade von der Geschicklichkeit des Bedienungsorganes abhängig, wobei gleichzeitig auch hier durch unterschiedliche Verweilzeiten Unregelmäßigkeiten in der Schweißnaht und damit in späterer Folge am Blech auftreten können.

Der vorliegenden Erfindung ist zum Ziel gesetzt, eine Vorrichtung zum Ausschneiden und Einschweißen von Blechronden zu schaffen, welche ein Ausschneiden mit hoher Präzision erlaubt, und daß das Einschweißen von Blechronden auch von ungeübtem Personal durchgeführt werden kann, ohne daß Unregelmäßigkeiten in der Schweißnaht bedingt sind. Weiters soll eine möglichst gleichmäßige Wärmeeinwirkung entlang der Schnittlinie sowie der Schweißnaht bedingt sein. Eine weitere Aufgabenstellung der vorliegenden Erfindung besteht darin, eine außerordentliche exakte Ausschneidung des zum Austausch bestimmten Bereiches zu erreichen.

In der DE-871.994-C wird eine transportable Trennmaschine zum Zerschneiden von Stabeisen und Blech beschrieben. Diese Maschine weist einen Elektromagneten auf, mit welchem dieselbe am Werkstück gehalten werden kann. Zur genauen Positionierung der Vorrichtung ist an dieser ein ausklappbares Ausrichtlineal vorgesehen. Als besonderer Vorteil bei dieser Handbrennmaschine wird angeführt, daß keine Unterlage benötigt wird. Ein Bewegen der Brennmaschine kann mit einem stufenlosen mechanischen Getriebe vorgenommen werden.

In der US-3,417,979-A wird eine Vorrichtung zum Schneiden und Schweißen beschrieben. Diese Vorrichtung weist drei höhenverstellbare Stützen auf, die mit dem magnetischen Blech entweder über Dauermagneten oder über Saugköpfe am Blech festgehalten sind. Diese Stützen tragen zum Blech benachbart eine Führung und oberhalb dieser einen Zahnkranz und eine entlang desselben über einen Elektromotor drehbare Tragplatte auf. Diese Tragplatte ist ihrerseits mit einem schwenkbaren Arm versehen, der einen nach unten weisenden Schweißbrenner trägt, welcher über eine Feder gegen die Führung federnd gehalten wird. Während der Drehbewegung wird somit der Kopf des Schweißbrenners entsprechend der Führung bewegt. Weder Permanentmagneten noch die Saugköpfe sind geeignet, eine derartig exakte Positionierung am Blech zu ermöglichen, daß ein eine derartig exakte Schnittführung durchgeführt ist, daß in späterer Folge eine Blechronde exakt eingeschweißt werden kann. In dieser Patentschrift wird auch davon geschrieben, daß ein Schweißen entlang der Führung auf dem Blech durchgeführt werden kann. Hier handelt es sich aber offensichtlich nicht darum, eine Blechronde einzuschweißen, sondern eine Auftragsschweißung durchzuführen. Bei einer derartigen Auftragsschweißung ist erneut eine exakte Positionierung der Auftragsschweißung ganz offensichtlich nicht so von Bedeutung, wie bei dem Einschweißen einer vorgefertigten Blechronde in eine mit dieser Einrichtung gefertigte Ausnehmung in dem Blech.

Die erfindungsgemäße Vorrichtung zum Ausschneiden und Einschweißen von Blechronden in ein Blech, insbesondere in ein endloses Blechband, z. B. in einer Doppelbandpresse, mit auf dem Blech anordenbarer Führung für eine Schneideinrichtung, einer Schweißeinrichtung sowie einer Unterlage für die zu bildende Schweißnaht, besteht im wesentlichen darin, daß die Führung mit zumindest einem, insbesondere mehreren, mit einer Vakuumpumpe verbundene Vakuumsaugelement(en) und/oder insbesondere Elektromagnet(en) am Blech gehalten werden kann, und daß eine Halterung für die Fräs- und/oder Schneid- und/oder Schweißeinrichtung über einen Motor entlang der Führung bewegbar ist.

Bleche, insbesondere endlose Bleche, die in einer Vorrichtung, beispielsweise Doppelbandpresse, od. dgl. vorgesehen sind, erfordern einen besonders hohen Aufwand, um ausgetauscht zu werden. Demgemäß ist das Bedürfnis, Reparaturen durch Austausch der betroffenen Teile zu vermeiden, von besonderer Bedeutung; sondern es ist wünschenswert, daß das Blech, beispielsweise das endlose Blechband, in der Produktionseinrichtung verbleiben kann, und die Substitution der beschädigten Stelle ohne Beeinträchtigung der Produktionsvorrichtung durchgeführt werden kann. Hierbei ist es wesentlich, daß ein exakter Schnitt zur Eliminierung des schadhaften Bereiches durchgeführt werden kann, welcher durch eine auf dem Blech anordenbare Führung realisiert ist. Eine Voraussetzung, daß eine derartige Führung zu einem exakten Schnitt führt, besteht darin, daß die Führung auf dem Blech exakt positionierbar ist, wobei weiters eine genaue Breite der Schnittführung, also auch der Schweißnaht, von hoher Bedeutung ist. Die exakte Positionierung der Führung am Blech kann durch Elektromagneten oder von Vakuumsaugelementen, die über eine Vakuumpumpe mit Unterdruck beaufschlagt werden können, erreicht werden. Die exakte Breite des Trennschnittes als auch der Schweißnaht ist über einen Motor, welcher diese Einrichtungen entlang der Führung bewegt, erzielbar.

Elektromagnetische Spannvorrichtungen für zu verbindende Blechplatten sind beispielsweise aus der DD-223.385-A und DE-1,565.632-A bekannt. Diesen Spannvorrichtungen ist gemeinsam, daß jeweils eine im wesentlichen gerade Schweißnaht gelegt werden soll, womit eine Kompensation der Wärmedehnung der zu verschweißenden Bleche gegenüber der magnetischen Aufspannvorrichtung durch Temperaturaufnahme der magnetischen Aufspannvorrichtung bzw. geringfügige Verschiebungen in Längsrichtung der Schweißnaht erreicht werden kann. Bei in sich geschlossenen Kurven, wie sie beim Ausschneiden von Ronden aus einem Blech bedingt sind, werden die Blechränder wie bei einer geraden Naht erhitzt und damit in ihrer Längserstreckung verlängert, jedoch kann dieselbe nicht durch Verschieben in Längsrichtung zur Schweißnaht kompensiert werden, sondern die Ränder des durch den Schneidvorgang oder Schweißvorgang hitzebeaufschlagten Bleches wölben sich mit hoher Kraft auf, so daß es durchaus unerwartet war, daß die elektromagnetisch und/oder mit Vakuumsaugelementen mit Vakuumpumpe festgehaltene Führung sowohl für den Schneidvorgang als auch für den anschließenden Schweißvorgang eine exakte prädestinierte Lage gewährleistet.

Zum Heben von Lasten, wie Bleche, Glasplatten od. dgl. ist es bekannt, sogenannte Vakuumheber zum Einsatz zu bringen. Derartige Vakuumheber weisen in der Regel eine kreisförmige Ringdichtung auf, die in der Nut einer Stahlplatte od. dgl. eingelassen ist. Bei Anliegen der Dichtung an das Blech od. dgl. wird ein abgeschlossener Raum gebildet, der durch eine Vakuumpumpe zumindest teilweise evakuiert werden kann. Der höchste Druck, der dadurch pro cm² ausgeübt werden kann, beträgt 1 kp/cm², so daß je nach erforderlicher Kraft, also Gewicht des zu transportierenden Gutes die Vakuumheber ausgebildet werden sollen.

Ein derartiger Vakuumheber weist in der Regel ein geringeres Vakuum auf, so daß durch Erwärmen, wie es beispielsweise bei Schweißen od. dgl. auftreten kann, der Unterdruck wesentlich beeinträchtigt wird, womit die Kraft, mit welcher der Vakuumheber auf das Blech od. dgl. einwirkt, verringert wird. Wesentlich ist bei der vorliegenden Erfindung und dies war durchaus nicht naheliegend, daß die Wärmeeinwirkung auf das Vakuumsaugelement so gering gehalten werden kann, daß dasselbe mit ausreichend hoher Kraft seine Funktion entweder zur Fixierung der Führung oder auch der Blechronde ausführen kann. Dies ist darauf zurückzuführen, daß mit der Führung entsprechend hohe Schneid-bzw. Schweißgeschwindigkeiten erreicht werden können.

Ist dem oder den Elektromagnet(en) zumindest ein Anker zugeordnet, welcher am Blech und an der Blechseite angeordnet ist, die fern dem Elektromagneten ist, so kann ungeachtet der magnetischen Eigenschaften des Bleches die Festlegung der Führung am Blech erfolgen, da der wesentliche Kraftschluß nicht zwischen Elektromagneten und dem Blech, sondern mit dem Anker erfolgt. Demgemäß können selbst para- oder diamagnetische Bleche mit der Schneid- und Schweißeinrichtung bearbeitet werden. Auch bei ferromagnetischen Blechen wird die Festlegung der Vorrichtung an einem bestimmten Ort über den Anker begünstigt.

Ist ein Tragelement, gegebenenfalls Anker, ringförmig und weist Halterungen für die Unterlage und/oder eine Auffangtasse auf, welche insbesondere beweglich oder lösbar mit dem Tragelement und/oder Anker verbunden sind, so ist die genaue Positionierung einer Tasse gewährleistet, welche beim Schneidvorgang auftretende Metallperlen, -späne u. dgl. aufnehmen kann, so daß bei einem Verbleiben des endlosen Bandes in der Produktionsmaschine jegliche zusätzliche Verunreinigung derselben besonders einfach vermieden werden kann. Die exakte Positionierung der Unterlage für den Schweißvorgang erlaubt ein Durchhängen der Schweißnaht nach unten zu verhindern und damit gleichzeitig eine fehlerfreie Ausführung der Schweißnaht.

Ist die Führung mit einem Lager, insbesondere Rollenlager, gebildet, das einerseits mit dem/den Elektromagnet(en) und/oder Vakuumsaugelement(en) und andererseits mit einem Träger verbunden ist, so ist auf besonders einfache Weise ein kreisrundes Ausschneiden und Einschweißen von Blechronden gewährleistet, wobei die kinematische Verbindung zwischen dem feststehenden Teil und dem beweglichen Teil durch bewährte Konstruktionselemente gewährleistet ist.

Erstreckt sich der Träger diametral über das Lager, so kann bei besonders platzsparender Ausgestaltung des Trägers derselbe für alle kreisrunden Ausschneidevorgänge unterschiedlicher Durchmesser und Einschweißvorgänge zum Einsatz gelangen.

Weist der Träger mehrere Halterungen mit jeweils unterschiedlichem Abstand zum Kreismittelpunkt des Lagers auf, so kann die Vorrichtung für Ronden vorbestimmten Durchmessers vorjustiert werden, so daß standardmäßig vorbereitete Blechronden zum Einschweißen vorgesehen werden können, wobei weiters geringfügige Änderungen im Durchmesser des Ausschnittes sowohl während des Ausschneidens als auch beim Einschweißen zwangsweise vermieden sind.

Weist der Träger den Motor mit Zahnrad oder Ritzel auf, welches mit einem zum Lager konzentrischen Zahnkranz kämmt, welcher von dem/den Elektromagnet(en) und/oder Vakuumsaugelement(en) gehalten ist, so ist eine Ausgestaltung gewährleistet, die einen besonders geringen Platzbedarf aufweist, wodurch ein Arbeiten an einem endlosen Blech in einer Vorrichtung besonders vorteilhaft gewährleistet ist.

Weist der Träger einen Arm mit einer weiteren Haltung auf, welcher vorzugsweise zusätzlich mit einem Innenring des Lagers verbunden ist, so ist die zusätzliche Halterung besonders fest lagefixiert und kann auch höheren mechanischen Beanspruchungen ausgesetzt werden, ohne eine relative Lageveränderung zu bedingen.

Weist der Träger eine mittige Ausnehmung, insbesondere Bohrung, auf, welche normal zum Blech gerichtet ist, so kann über dieselbe eine exakte Ausrichtung erfolgen, wobei über die mittige Ausnehmung und einer in dem zu bearbeitenden Blech vorgesehene Ausnehmung eine Zentrierung sowohl der Führung als auch des Ankers auf besonders einfache und exakte Art und Weise ermöglicht ist.

Ist in der Ausnehmung ein Zentrierstift anordenbar, welcher über das Blech hinausragt und gemeinsam mit dem Tragelement, gegebenenfalls dem Anker, insbesondere über eine Auffangtasse, zentrierbar ist, so ist eine einfache und mechanisch leicht justierbare Vorrichtung gegeben, wobei gleichzeitig dem Arbeitsablauf, u. zw. daß vorerst ein Ausschneidevorgang für die Blechronde erforderlich ist, um den Ausschnitt durchzuführen, Rechnung getragen ist, da keine zusätzliche Zentriereinrichtung erforderlich wird.

Ist zwischen Träger und einzusetzender Blechronde zumindest ein weiterer Elektromagnet und/oder weiteres Vakuumsaugelement anordenbar, so kann über denselben/dasselbe die einzusetzende Blechronde an prädestinierter Stelle festgehalten sein, so daß nachfolgende Schweißvorgänge, z. B. Einheften der Blechronde, in das Blech mit hoher Genauigkeit erfolgen kann.

Ist die Unterlage mit ferromagnetischem Material aufgebaut und weist im Bereich der vorzusehenden Schweißnaht Einlagen aus Kupfer od. dgl. auf, welche mit dem Material der Schweißnaht nicht mischbar sind, so bildet einerseits die Unterlage einen magnetischen Anker zum Festhalten der Blechronde und andererseits wird ein Durchsacken der Schweißnaht in bekannter Art und Weise verhindert.

Weist der Träger eine Halterung für eine Exzenteraufnahmehülse für einen Fräser auf, deren Achse etwa normal zur Blechebene gerichtet ist, so kann allfällig auftretenden Unregelmäßigkeiten der Schneidkurve, beispielsweise mit Metallperlen od. dgl., besonders einfach Rechnung getragen werden, da die Exzenteraufnahmehülse eine besonders exakte Einstellung eines Fräsers zur Bearbeitung der Metallränder erlaubt.

Sind die Vakuumsaugelemente und/oder die Elektromagneten in einem Hohlprofil angeordnet, das ringförmig ausgebildet ist und einen Außenring des Lagers und gegebenenfalls den Zahnkranz trägt, so kann durch spezifische Ausbildung des Hohlprofiles, beispielsweise Arbeitskanten, die z. B. geringfügig über den Elektromagneten vorstehen, erreicht werden, daß ein gleichmäßiger Druck während des Haltens ausgeübt wird, wobei auch bei Ausfall eines Elektromagneten bzw. Vakuumsaugelementes dieser gewährleistet ist. Auf Grund der geringeren Flächen der Arbeitskanten kann auch ein höherer Haltedruck ausgeübt werden.

Durch eine Außenverzahnung des Zahnkranzes sind Konstruktionen mit geringsten Toleranzen ermöglicht, die eine besonders hohe Präzision bei der Reproduzierbarkeit in der Aufeinanderfolge des Ausschneidevorganges bzw. des Schweißvorganges ermöglichen.

Sind die Vakuumsaugelemente durch das Hohlprofil gebildet, welches an der zum Blech gewandten Stirnfläche mit diesem über ein Dichtelement abgedichtet ist, so ist eine besonders einfache und gewichtssparende Vorrichtung gegeben, die damit in ihrer Handhabung vom Bedienungspersonal besonders exakt positioniert und bedient werden kann.

Im folgenden wird die Erfindung anhand der Zeichnungen näher erläutert.

Es zeigen:
Fig. 1 eine Schneid- und Schweißeinrichtung von oben,
Fig. 2 die Schneid- und Schweißeinrichtung im Schnitt entlang der Linie II-II von Fig. 1 mit eingesetztem Fräser,
Fig. 3 den Schnitt entlang der Linie III-III von Fig. 1 mit eingesetzter Schweißeinrichtung und Haltemagnet für eine Blechronde,
Fig. 4 die Darstellung im Schnitt gemäß Fig. 3, jedoch mit Vakuumsaugelementen,
Fig. 5 eine schematische Schaltanordnung für Vakuumsaugelemente und
Fig. 6 und 7 eine Schneid- und Schweißeinrichtung im Schnitt entsprechend der Linie III-III von Fig. 1, jedoch mit ringförmigen Vakuumsaugelementen.

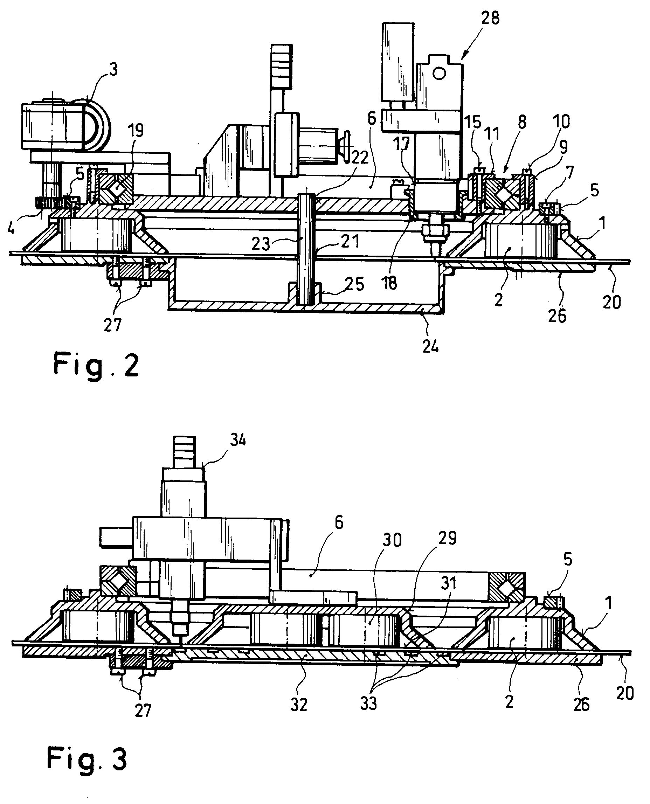

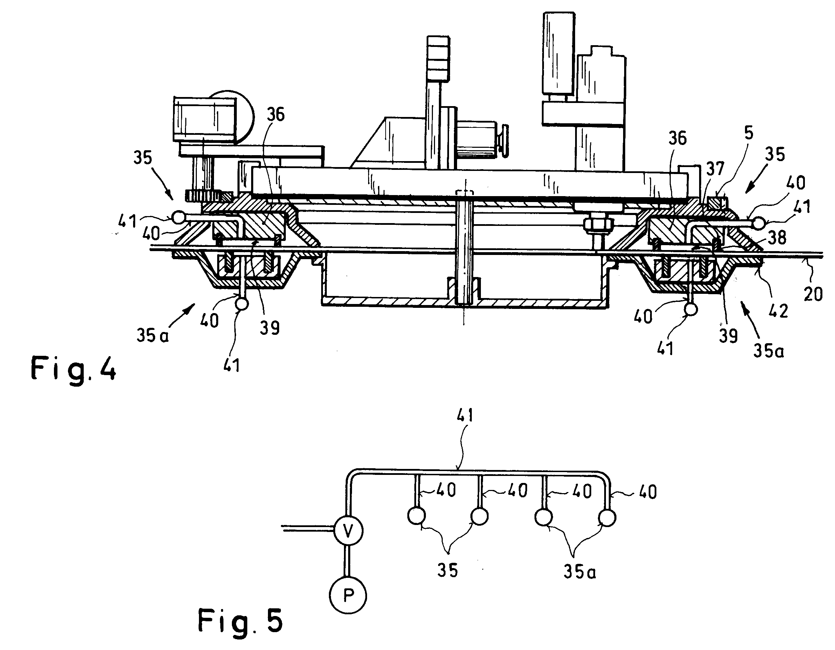

Im nicht ferromagnetischen ringförmigen Hohlprofil 1, das aus Aluminium besteht, sind zwölf zylinderförmige Elektromagnete 2 angeordnet. An ihrer Stelle können auch, wie in Fig. 4 dargestellt, Vakuumsaugelemente vorgesehen sein. Eine Kühlung kann sowohl im Hohlprofil als auch in den Magneten, z. B. mit im Kreislauf geführten Wasser, vorgesehen sein. Im Zentrum des zylinderförmigen Elektromagneten ist der Nordpol, wohingegen der Südpol denselben in Abstand ringförmig umgibt. Die Elektromagneten werden mit einem Gleichstrom von 24 Volt gespeist. Die Stromstärke je Magnet beträgt 0,6 A. Die Elektromagneten sind parallel geschaltet und können jeder für sich eine in Serie geschaltete Anzeige aufweisen, welche bei Nichtfunktion des Elektromagneten erlischt. Der Elektromotor 3, welcher, wie besonders deutlich der Fig. 2 zu entnehmen, über ein Ritzel 4 mit einem Zahnkranz 5 kämmt, bewegt den Träger 6 in einer kreisförmigen Bahn. Der Zahnkranz 5 ist am Profil 1 über Schrauben 7 befestigt. Das Profil trägt weiters ein Lager 8, wobei der Außenring 9 über Schrauben 10 mit dem Profil 1 verbunden ist, wohingegen der Innenring 11 mit dem Träger 6 verbunden ist. Dieser Träger weist drei Halterungen 12, 13, 14 für eine Plasmaschneide- und Fräseinrichtung auf. Der Träger 6 ist diametral über den Innenring gelegt und an beiden Endbereichen mit dem Innenring über die Schrauben 15 verbunden. Der Träger 6 weist weiters einen Arm 16 auf, welcher, wie in Fig. 2 besonders deutlich ersichtlich, eine Halterung 17 mit Exzenterbuchse 18, deren Achse normal zum Blech verläuft, aufweist. Zwischen dem Außenring 9 und dem Innenring 11 des Lagers 8 sind Rollen 19 angeordnet, und es liegt ein Rollenlager vor. Zur Montage der Vorrichtung an einem Blech 20 wird nun derart vorgegangen, daß nach Bestimmung der schadhaften Stelle im Blechband die schadhafte Stelle vermessen wird, um die Größe des zu entfernenden kreisförmigen Blechstückes zu bestimmen. Sodann wird in das Blechband, welches in der Produktiosmaschine, z. B. eine Doppelbandpresse, verbleiben kann, ein Loch 21 gebohrt oder gebrannt. In dem Träger 6 wird in die, bezogen auf das Lager mittige, Ausnehmung 22 ein Zentrierstift 23 eingesetzt. Der Teil mit dem ringförmigen Profil und den Elektromagneten wird sodann auf das Blech 20 aufgesetzt, so daß der Zentrierstift 23 durch das Blech hindurchragt. Auf der Gegenseite des Bleches, üblicherweise die Unterseite des Bleches, wird über die Auffangtasse 24 und dem Zentrierstift 23, welcher in eine Aufnahme 25 der Auffangtasse eingreift, zentriert. Die Auffangtasse ihrerseits wird von einem Anker 26 aus Weicheisen über Halteeinrichtungen mit Schrauben 27 lösbar gehalten. Bei dem Ausschneidevorgang der kreisförmigen Fläche aus dem Blech wird zuerst ein Plasmabrenner gezündet, wonach der Elektromotor 3 eingeschaltet wird. Durch Einhaltung dieser Reihenfolge ist sichergestellt, daß am Beginn des Schnittes der Plasmastrahl sich nicht in die Oberfläche einbrennt und zu einer unerwünschten Verbreiterung der Trennlinie führt. Mit Beendigung des Schneidvorganges fällt die nunmehr ausgeschnittene schadhafte Blechronde in die Auffangtasse 24, worauf der Fräser 28 über die Exzenterbuchsen 18 zur exakten Bearbeitung der Schnittlinie ebenfalls wieder über den Elektromotor 3 und über die Führung durch das Lager 8 bewegt wird. Falls erwünscht, kann der Fräser auch so eingestellt werden, daß die Schnittkante abgefast wird. Der Fräser wird mit Preßluft betrieben, und die Späne gelangen in der Auffangtasse zur Aufnahme. Nach Durchführung des Schnittes und der mechanischen Bearbeitung wird der Fräser 28 demontiert. Durch Lösen des mit dem Schrauben 27 befestigten Bajonettverschlusses wird die Auffangtasse gemeinsam mit dem Zentrierstift entfernt. Wie in Fig. 3 ersichtlich, wird der Träger 6 mit einem topfförmigen Profil 29, das ebenfalls Elektromagneten 30 aufweist, verbunden. Sodann wird eine vorgefertigte Blechronde 31 eingesetzt. Bei eingeschalteten Elektromagneten 30 kann die blechronde von denselben gehalten werden, so daß die Unterlage 32 besonders einfach mit dem magnetischen Anker 26 verbunden werden kann. Die Unterlage selbst besteht ebenfalls aus Weicheisen und weist ringförmige Nuten auf, in welche Kupferringe 33 eingelassen sind. Der Abstand dieser Kupferringe zum Zentrum des Lagers ist mit den Abständen der Haltungen 12, 13, 14 für das WIG-Schweißgerät 34 abgestimmt. Es sind drei verschiedene Größen für Blechronden vorgesehen, die den unterschiedlichen Lagen der Halterung sowie der ringförmigen Kupfereinsätze entsprechen.

Der in Fig. 4 dargestellte Schnitt entspricht im wesentlichen dem Schnitt gemäß Fig. 3, wobei anstelle der Elektromagneten Vakuumsaugelemente 35 vorgesehen sind. Die im Hohlprofil 1 angeordneten Vakuumsaugelemente 35 werden jeweils durch eine kreisförmige Aluminiumplatte 36 gebildet, die an ihrer zum Blech 20 weisenden Stirnfläche eine ringförmige Nut 37 aufweist, in welcher ein ringförmiges Dichtungselement 38 angeordnet ist, u. zw. ein O-Ring mit 7 mm Durchmesser im Querschnitt, das eine Fläche von 177 cm² einschließt, und am Blech 20 anliegt. In den durch das Dichtelement 38 und der Stirnfläche der Aluminiumplatte 36 mit dem Blech gebildeten Hohlraum 39 mit 88 cm³ schließt eine Vakuumleitung 40 mit einem Durchmesser von 16 mm an, die in eine kreisförmige Vakuumleitung 41 mit einem Durchmesser von ebenfalls 16 mm mündet, welche ihrerseits über ein Dreiwegventil, das einerseits zur Belüftung des Hohlraumes 39 dient und andererseits mit einer nicht dargestellten Vakuumpumpe die Hohlräume 39 verbindet und so wie bei Einschaltung des Stromes bei den Elektromagneten die Vakuumsaugelemente 35 mit Unterdruck beaufschlagt und damit für das Festhalten am Blech Sorge trägt. Die Vakuumsaugelemente 35a, welche analog zu den anderen Vakuumsaugelementen 35 ausgebildet sind, halten das Tragelement 42, das im wesentlichen dem Anker 26 entspricht, gegen das Blech 20, wobei ebenfalls Vakuumleitungen 40 und 41 vorgesehen sind. Die Vakuumsaugelemente sind jeweils parallelgeschaltet.

In Fig. 5 ist schematisch eine Schaltung der Vakuumsaugelemente 35, 35a mit dem Dreiwegventil V und der Vakuumpumpe P dargestellt. Wie ersichtlich, liegen die Vakuumsaugelemente 35 und 35a über ihre Vakuumleitungen 40 parallelgeschaltet an der Vakuumleitung 41, die mit dem Ventil V verbunden ist. Je nach Stellung des Ventiles V sind die Hohlräume der Vakuumsaugelemente 35 bzw. 35a mit der Atmosphäre bzw. mit der Vakuumpumpe verbunden. Als Vakuumpumpe für die Ausführungsformen gemäß Fig. 5, 6 und 7 wurde eine Kolbenpumpe eingesetzt, die elektrisch betrieben war. Die Leistungsaufnahme des Elektromotors war 0,55 kW und es konnte ein mittleres Vakuum bis zu 20 mbar erhalten werden. Die Saugleistung betrug 200 Liter pro Minute. Bei 20 mbar betrug die Saugleistung noch 90 % der bei Normaldruck. Wird die Vorrichtung auf dem Blech situiert, so wird die Vakuumpumpe P eingeschaltet und die Hohlräume evakuiert, worauf der entsprechende Ausschnitt am Band erfolgt, Fräsarbeiten od. dgl., je nach Erfordernis durchgeführt werden und die zur Einschweißung bestimmte Blechronde eingelegt wird, wobei ananlog zu Fig. 2 auch die Auffangtasse 24 bzw. die Unterlage 32 vorgesehen werden kann. Nach Abschluß der Arbeiten werden die Hohlräume 39 über das Ventil V belüftet, so daß die Vorrichtungen einfach abgehoben werden können.

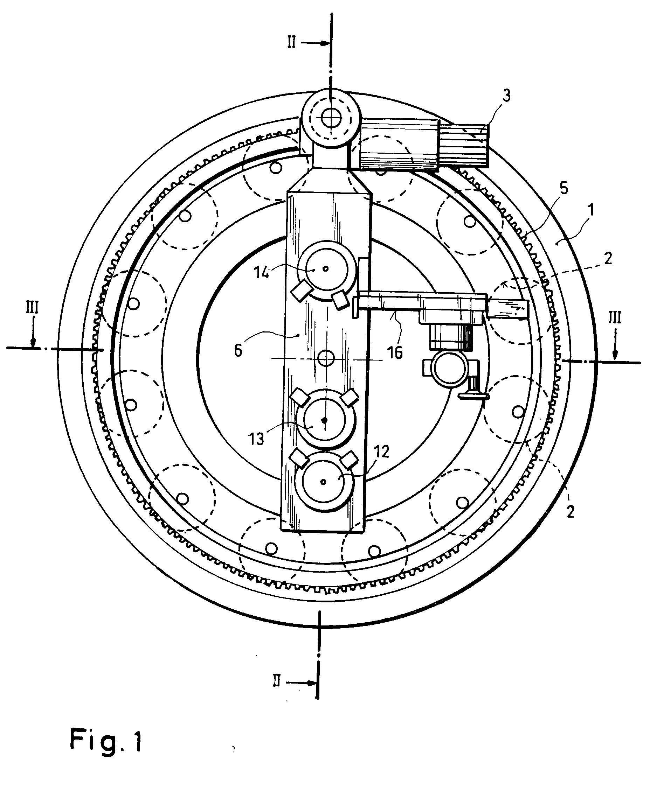

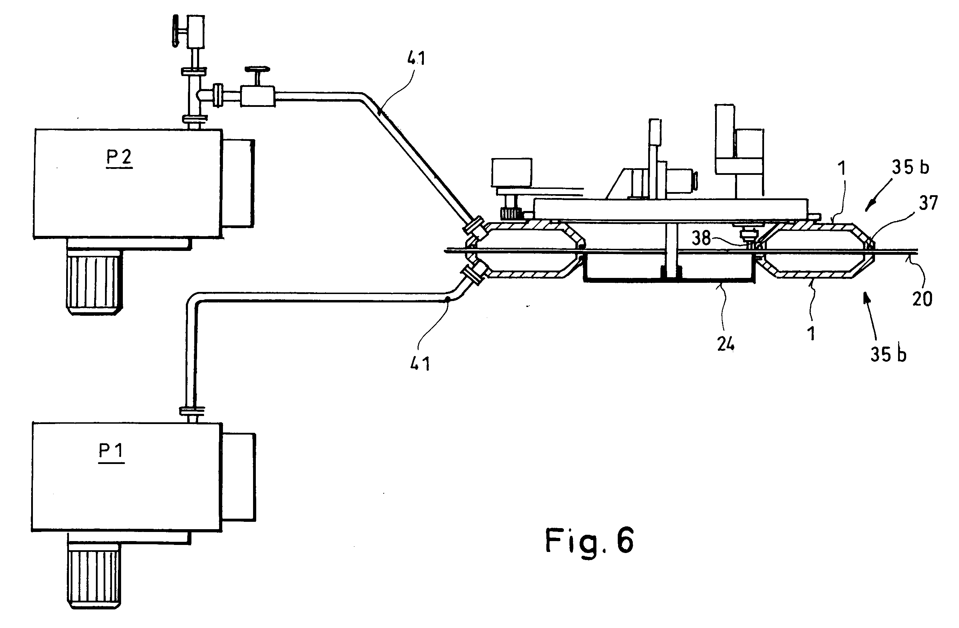

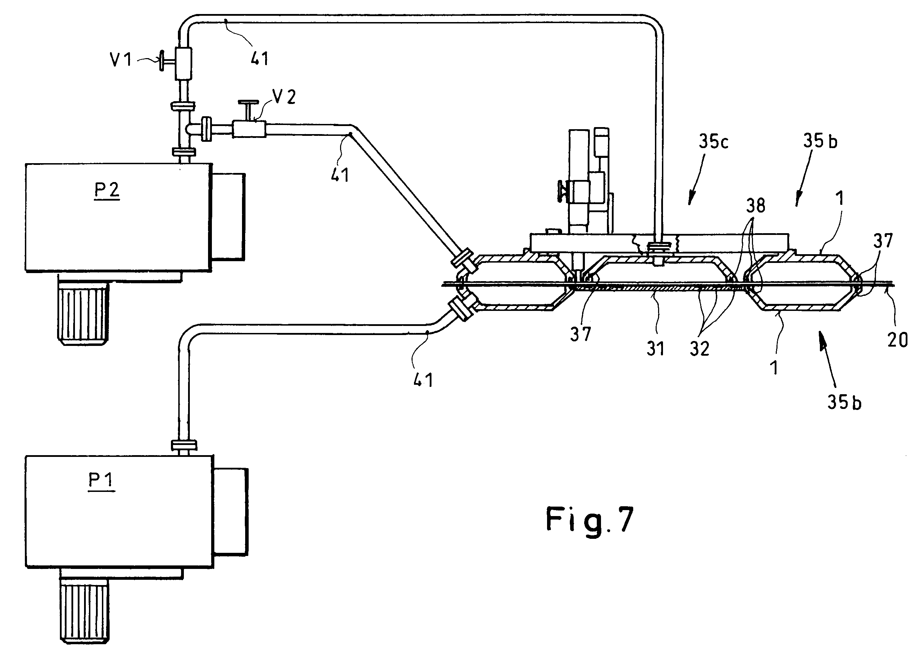

Die in den Fig. 6 und 7 dargestellte Schneid- und Schweißeinrichtung entspricht jener von Fig. 1, wobei anstelle der Elektromagneten bzw. einzelnen Vakuumsaugelementen ringförmige Saug-Elemente 35b vorgesehen sind, die im wesentlichen durch die ringförmigen liohlprofile 1 gebildet sind, die jeweils kreisförmige Nuten 37 aufweisen, in welchen Dichtungselemente 38, u. zw. O-Ringe mit einem kreisförmigen Querschnitt und einem Durchmesser von 7 mm, eingesetzt sind. Die ringförmigen Vakuumsaugelemente liegen über diese Dichtelemente 38 am Blech 20 an und weisen ein Volumen von 10,1 Liter auf. Die ringförmigen Vakuumsaugelemente sind über die Vakuumleitungen 41 mit den Vakuumpumpen P₁ und P₂ verbunden. Das untere ringförmige Vakuumsaugelement 35b trägt entweder, wie in Fig. 6 dargestellt, eine Auffangtasse 24, welche allfällig auftretende Schweißperlen od. dgl. sowie Fräsabfälle auffangen kann. Bei der in Fig. 7 dargestellten Arbeitsposition ist ein weiteres mittiges Vakuumsaugelement 35c mit 0,4 Liter, 1,0 Liter bzw. 2,0 Liter Volumen, je nach Größe der einzusetzenden Ronden, vorgesehen, welches die einzuschweißende Blechronde 31 festhält. Weiters wird die Unterlage 32 von dem unteren ringförmigen Vakuumsaugelement 35b gehalten. Das ringförmige untere Vakuumsaugelement 35b ist mit einer eigenen Vakuumpumpe P₁ verbunden, wohingegen das obere ringförmige Vakuumsaugelement 35b gemeinsam mit dem Vakuumsaugelement 35c über ein T-Stück, welches jeweils Ventile V₁ und V₂ aufweist, mit der Vakuumpumpe P₂ verbunden ist. Um die Vorrichtung möglichst rasch am Blech 20 zu fixieren, wird vorerst das Ventil V₂ geöffnet und das Ventil V₁ geschlossen. Nach Erreichen des erwünschten Vakuums im Vakuumsaugelement 35b wird das Ventil V₂ geschlossen und das Ventil V₁ geöffnet, so daß eine alleinige Evakuierung des Vakuumsaugelementes 35c erfolgt. Die Vakuumsaugpumpe kann anschließend auch weiter in Betrieb gehalten werden, wobei beide Ventile V₁ und V₂ geöffnet sind. Eine Belüftung der Vakuumsaugelemcnte 35b und 35c kann auch durch Belüftung der Pumpen P₁ bzw. P₂ erfolgen. Die Verfahrensweise beim Ausschneiden, Fräsen und Einschweißen von Ronden ist analog zu der mit der Vorrichtung mit Elektromagneten.

Die im folgenden beschriebenen Schweißungen wurden an zwei unterschiedlichen Blechen mit kreisrunden Ronden, beide mit 2 mm Dicke und 300 mm Durchmesser, der einzusetzenden Ronden durchgeführt, wobei die entsprechenden Ausschnitte im Blech ebenfalls mit einem Plasmaschneider durchgeführt und anschließend gefräst wurden.

Die Stähle wiesen folgende Zusammensetzung auf:

| Stahl A: | |
|---|---|
| Kohlenstoff: | max. 0,09 Gew.-% |
| Chrom: | 15,0 Gew.-% |
| Nickel: | 7,0 Gew.-% |
| Kupfer: | 0,7 Gew.-% |
| Titan: | 0,4 Gew.-% |
| Rest Eisen und Verunreinigungen | |

| Stahl B: | |
|---|---|
| Kohlenstoff: | max. 0,03 Gew.-% |
| Chrom: | 14,5 Gew.-% |
| Nickel: | 4,5 Gew.-% |
| Kupfer: | 3,3 Gew.-% |
| Mangan: | 0,75 Gew.-% |
| Silicium: | 0,3 Gew.-% |
| Niob: | min. 5 x Gew.-% C |
| Rest Eisen und Verunreinigungen. | |

Beim Einschweißen der Blechronde wurde nun so vorgegangen, daß über den Elektromotor 3 das WIG-Schweißgerät 34 vorerst jeweils um 60° bewegt wurde, wonach die Blechronde am Blechband angeheftet wurde. Dieser Heftvorgang erfolgte insgesamt sechsmal, wonach der eigentliche Schweißvorgang durchgeführt wurde. Es war durchaus überraschend, daß die Schweißnaht anschließend in einem Durchgang gelegt werden konnte, wobei das Schweißen mit oder ohne Pulsen des Stromes erfolgte, und das WIG-Schweißgerät mit 0,16 m/min entlang der zu legenden Schweißnaht bewegt wurde. Die Schweißung wurde mit artgleichem Schweißzusatzmaterial bei 2 mm Banddicke mit einer automatischen Drahtzuführung von 350 mm/min, 220 V Spannung und 110 A durchgeführt. Nach Abschluß der Schweißarbeiten wurde die Stromzufuhr zu allen Elektromagneten bzw. zur Vakuumpumpe unterbrochen, worauf sowohl das ringförmige Profil mit den Elektromagneten bzw. Vakuumsaugelementen und Träger als auch der ringförmige Anker entfernt wurde. Anschließend erfolgte ein Kaltschmieden der Schweißnaht durch einfaches Hämmern, wobei unterhalb des Bleches eine massive Unterlagsplatte angeordnet wurde. Nach Kaltverformung der Schweißnaht erfolgte ein Abschleifen derselben bis zur Dicke des Blechbandes, worauf die Naht als auch die Blechronde erneut poliert wurde. Falls erforderlich, kann vor dem Poliervorgang auch eine Wärmebehandlung, beispielsweise Anlassen aber auch Vergüten, erfolgen. Zum Schweißen ist besonders eine WIG-Schweißanlage geeignet und zum Schneiden ein Plasmaschneider, wobei zusätzlich Preßluft benötigt wird.

Die Bleche waren jeweils endlose Bänder, die einer Doppelbandpresse angeordnet waren.

## Patentansprüche

1. Vorrichtung zum Ausschneiden und Einschweißen von Blechronden (31) in ein Blech (20), insbesondere in ein endloses Blechband, z. B. in einer Doppelbandpresse, mit auf dem Blech (20) anordenbarer Führung für eine Schneideinrichtung (34), einer Schweißeinrichtung (34) sowie einer Unterlage (32) für die zu bildende Schweißnaht, dadurch gekennzeichnet, daß die Führung (8) mit zumindest einem, insbesondere mehreren, mit zumindest einer Vakuumpumpe (P) verbundene(n) Vakuumsaugelement(en) (35, 35a, 35b, 35c) und/oder insbesondere Elektromagnet(en) (2) am Blech gehalten werden kann, und daß eine Halterung (12, 13, 14) für die Fräs- und/oder Schneid- und/oder Schweißeinrichtung (28, 34) über einen Motor (3) entlang der Führung (8) bewegbar ist.

2. Vorrichtung zum Ausschneiden und Einschweißen von Blechronden nach Anspruch 1, dadurch gekennzeichnet, daß dem/den Elektromagnet(en) (2) zumindest ein Anker (26) an jener Blechseite zugeordnet ist, die fern der Elektromagneten (2) ist.

3. Vorrichtung zum Ausschneiden und Einschweißen von Blechronden nach Anspruch 1 oder 2, dadurch gekennzeichnet, daß ein Tragelement (42), gegebenenfalls der Anker (26), ringförmig ist und Halterungen für die Unterlage (32) und/oder eine Auffangtasse (24) aufweist, welche Halterungen, insbesondere beweglich oder lösbar, mit dem Tragelement (42) und/oder Anker (26) verbunden sind.

4. Vorrichtung zum Ausschneiden und Einschweißen von Blechronden nach einem der Ansprüche 1, 2 oder 3, dadurch gekennzeichnet, daß die Führung mit einem Lager (8), insbesondere Rollenlager, gebildet ist, das einerseits mit dem/den Elektromagnet(en) (2) und/oder Vakuumsaugelement(en) (35, 35a, 35b, 35c) und andererseits mit einem Träger (6) verbunden ist.

5. Vorrichtung zum Ausschneiden und Einschweißen von Blechronden nach Anspruch 4, dadurch gekennzeichnet, daß der Träger (6) sich diametral über das Lager (8) erstreckt.

6. Vorrichtung zum Ausschneiden und Einschweißen von Blechronden nach Anspruch 4 oder 5, dadurch gekennzeichnet, daß der Träger (6) mehrere Halterungen (12, 13, 14) mit jeweils unterschiedlichem Abstand zum Mittelpunkt des Lagers (8) aufweist.

7. Vorrichtung zum Ausschneiden und Einschweißen von Blechronden nach Anspruch 4, 5 oder 6, dadurch gekennzeichnet, daß der Träger (6) den Motor (3) mit Zahnrad oder Ritzel (4) aufweist, welches mit einem zum Lager konzentrischen Zahnkranz (5) kämmt, welcher von dem/den Elektromagnet(en) (2) und/oder Vakuumsaugelement(en) (35, 35a, 35b, 35c), insbesondere mittelbar, gehalten ist.

8. Vorrichtung zum Ausschneiden und Einschweißen von Blechronden nach einem der Ansprüche 4 bis 7, dadurch gekennzeichnet, daß der Träger (6) einen Arm (16) mit einer weiteren Halterung (17) aufweist, welcher vorzugsweise zusätzlich mit einem Innenring (11) des Lagers (8) verbunden ist.

9. Vorrichtung zum Ausschneiden und Einschweißen von Blechronden nach einem der Ansprüche 4 bis 8, dadurch gekennzeichnet, daß der Träger (6) eine mittige Ausnehmung (22) aufweist, welche normal zum Blech (20) gerichtet ist.

10. Vorrichtung zum Ausschneiden und Einschweißen von Blechronden nach Anspruch 9, dadurch gekennzeichnet, daß in der Ausnehmung (22) ein Zentrierstift (23) anordenbar ist, welcher über das Blech (20) hinausragt und gemeinsam mit dem Tragelement (42), gegebenenfalls dem Anker (26), insbesondere über eine Auffangtasse (24), zentrierbar ist.

11. Vorrichtung zum Ausschneiden und Einschweißen von Blechronden nach einem der Ansprüche 1 bis 10, dadurch gekennzeichnet, daß zwischen Träger (6) und eingesetzter Blechronde (31) zumindest ein weiterer Elektromagnet (30) und/oder weiteres Vakuumsaugelement (35, 35c) anordenbar ist.

12. Vorrichtung zum Ausschneiden und Einschweißen von Blechrondcn nach einem der Ansprüche 1 bis 11, dadurch gekennzeichnet, daß die Unterlage (32) mit ferromagnetischem Material aufgebaut ist und im Bereich der vorzusehenden Schweißnähte Einlagen (33) aus Kupfer od. dgl. aufweist, welche mit dem Material der Schweißnaht nicht mischbar sind.

13. Vorrichtung zum Ausschneiden und Einschweißen von Blechronden nach einem der Ansprüche 1 bis 12, dadurch gekennzeichnet, daß der Träger (6), insbesondere der Arm (16) des Trägers eine Halterung (17) für eine Exzenterhülse (18) für einen Fräser (28) aufweist, deren Achse etwa normal zur Blechebene gerichtet ist.

14. Vorrichtung zum Ausschneiden und Einschweißen von Blechronden nach einem der Ansprüche 1 bis 13, dadurch gekennzeichnet, daß die Vakuumsaugelemente (35, 35a) und/oder Elektromagneten (2) in einem Hohlprofil (1) angeordnet sind, das ringförmig ausgebildet ist und einen Außenring (9) des Lagers (8) und gegebenenfalls einen Zahnkranz (5) trägt.

15. Vorrichtung zum Ausschneiden und Einschweißen von Blechronden nach Anspruch 14, dadurch gekennzeichnet, daß der Zahnkranz (5) eine Außenverzahnung aufweist.

16. Vorrichtung zum Ausschneiden und Einschweißen von Blechronden nach einem der Ansprüche 1 bis 15, dadurch gekennzeichnet, daß Vakuumsaugelemente (35b) durch das Hohlprofil (1) gebildet sind, welches an der zum Blech (20) gewandten Stirnfläche mit diesem über ein Dichtungselement (38) abgedichtet ist.

## Claims

1. Device for cutting out and welding in sheet-metal discs (31) in a metal sheet (20), in particular in an endless sheet-metal strip, e.g. in a double strip press, with a guide which can be disposed on the metal sheet (20) for a cutting device (28), a welding device (34) and a backing support (32) for the weld seam to be formed, characterised in that the guide (8) can be held on the metal sheet with at least one, in particular a plurality of vacuum suction elements (35, 35a, 35b, 35c) connected with at least one vacuum pump (P) and/or in particular electromagnets (2), and in that a mounting (12, 13, 14) for the milling and/or cutting and/or welding device (28, 34) can be moved along the guide (8) by means of a motor (3).

2. Device for cutting out and welding in sheet-metal discs according to claim 1, characterised in that the electromagnet or electromagnets (2) co-operate with at least one armature (26) on the side of the metal sheet which is remote from the electromagnets (2).

3. Device for cutting out and welding in sheet-metal discs according to claim 1 or 2, characterised in that a supporting element (42), possibly the armature (26), is ring-shaped and exhibits mountings for the backing support (32) and/or a collecting tray (24), which mountings are connected, in particular moveably or detachably, with the supporting element (42) and/or armature (26).

4. Device for cutting out and welding in sheet-metal discs according to one of claims 1, 2 or 3, characterised in that the guide is formed with a bearing (8), in particular a roller bearing, which is connected firstly with the electromagnet or electromagnets (2) and/or the vacuum suction element or vacuum suction elements (35, 35a, 35b, 35c) and secondly with a carrier (6).

5. Device for cutting out and welding in sheet-metal discs according to claim 4, characterised in that the carrier (6) extends diametrically over the bearing (8).

6. Device for cutting out and welding in sheet-metal discs according to claim 4 or 5, characterised in that the carrier (6) exhibits a plurality of mountings (12, 13, 14) each a different distance from the centre point of the bearing (8).

7. Device for cutting out and welding in sheet-metal discs according to claim 4, 5 or 6, characterised in that the carrier (6) exhibits the motor (3) with a gear or pinion (4) which meshes with a gear ring (5) which is concentric with the bearing and is held, in particular indirectly, by the electromagnet or electromagnets (2) and/or the vacuum suction element or vacuum suction elements (35, 35a, 35b, 35c).

8. Device for cutting out and welding in sheet-metal discs according to one of claims 4 to 7, characterised in that the carrier (6) exhibits an arm (16) with a further mounting (17), which arm is preferably additionally connected with an inner ring (11) of the bearing (8).

9. Device for cutting out and welding in sheet-metal discs according to one of claims 4 to 8, characterised in that the carrier (6) exhibits a central recess (22) which is aligned normal to the metal sheet (20).

10. Device for cutting out and welding in sheet-metal discs according to claim 9, characterised in that a centering pin (23) can be disposed in the recess (22), which centering pin projects beyond the metal sheet (20) and can be centred together with the supporting element (42), possibly the armature (26), in particular over a collecting tray (24).

11. Device for cutting out and welding in sheet-metal discs according to one of claims 1 to 10, characterised in that at least one further electromagnet (30) and/or further vacuum suction element (35, 35c) can be disposed between the carrier (6) and the inserted sheet-metal disc (31).

12. Device for cutting out and welding in sheet-metal discs according to one of claims 1 to 11, characterised in that the backing support (32) is made of ferromagnetic material and in the area of the weld seams to be produced exhibits inlays (33) of copper or the like which are not miscible with the material of the weld seam.

13. Device for cutting out and welding in sheet-metal discs according to one of claims 1 to 12, characterised in that the carrier (6), in particular the arm (16) of the carrier, exhibits a mounting (17) for an eccentric sleeve (18) for a milling cutter (28) the axis of which is aligned roughly normal to the plane of the metal sheet.

14. Device for cutting out and welding in sheet-metal discs according to one of claims 1 to 13, characterised in that the vacuum suction elements (35, 35a) and/or electromagnets (2) are disposed in a hollow profile (1) which is ring-shaped and carries an outer ring (9) of the bearing (8) and possibly a gear ring (5).

15. Device for cutting out and welding in sheet-metal discs according to claim 14, characterised in that the gear ring (5) has external teeth.

16. Device for cutting out and welding in sheet-metal discs according to one of claims 1 to 15, characterised in that vacuum suction elements (35b) are formed by the hollow profile (1) which on the front surface facing the metal sheet (20) is sealed with the latter by means of a sealing element (38).

## Revendications

1. Dispositif pour découper et souder des ronds de tôle (31) dans une tôle (20), notamment dans une bande de tôle continue, par exemple dans une presse à doubles bandes, comprenant un guide pour un dispositif de coupe (34), qui peut être placé sur la tôle (20), un dispositif de soudage (34) ainsi qu'une base (32) pour la soudure à former, caractérisé en ce que le guide (8) peut être maintenu sur la tôle à l'aide d'au moins un, notamment plusieurs, élément/s de ventouse (35, 35a, 35b, 35c) relié/s à au moins une pompe à vide (P) et/ou électroaimant/s (2) notamment, et en ce qu'une fixation (12, 13, 14) pour le dispositif de fraisage et/ou coupe et/ou soudage (28, 34) peut être déplacée le long du guide (8) au moyen d'un moteur (3).

2. Dispositif pour découper et souder des ronds de tôle selon la revendication 1, caractérisé en ce qu'un induit (26) au moins est associé à/aux électroaimant/s (2) sur le côté de la tôle qui est éloigné des électroaimants (2).

3. Dispositif pour découper et souder des ronds de tôle selon l'une des revendications 1 ou 2, caractérisé en ce qu'un élément de support (42), le cas échéant l'induit (26), est annulaire et est pourvu de fixations pour la base (32) et/ou un bac collecteur (24), lesquelles fixations sont reliées à l'élément de support (42) et/ou induit (26), notamment de manière mobile ou amovible.

4. Dispositif pour découper et souder des ronds de tôle selon l'une des revendications 1, 2 ou 3, caractérisé en ce que le guide est formé avec un palier (8), notamment un palier à rouleaux, qui est relié d'une part à/aux électroaimant/s (2) et/ou élément/s de ventouse (35, 35a, 35b, 35c) et d'autre part à un support (6).

5. Dispositif pour découper et souder des ronds de tôle selon la revendication 4, caractérisé en ce que le support (6) s'étend diamétralement sur le palier (8).

6. Dispositif pour découper et souder des ronds de tôle selon l'une des revendications 4 ou 5, caractérisé en ce que le support (6) est pourvu de plusieurs fixations (12, 13, 14) qui présentent chacune une distance différente par rapport au centre du palier (8).

7. Dispositif pour découper et souder des ronds de tôle selon l'une des revendications 4, 5 ou 6, caractérisé en ce que le support (6) comprend le moteur (3) avec une roue dentée ou un pignon (4) qui s'engrène avec une couronne dentée (5) concentrique par rapport au palier, qui est maintenue, notamment de manière indirecte, par le/les électroaimant/s (2) et/ou élément/s de ventouse (35, 35a, 35b, 35c).

8. Dispositif pour découper et souder des ronds de tôle selon l'une des revendications 4 à 7, caractérisé en ce que le support (6) est pourvu d'un bras (16) avec une fixation (17) supplémentaire, lequel bras est de préférence relié, en plus, à un anneau intérieur (11) du palier (8).

9. Dispositif pour découper et souder des ronds de tôle selon l'une des revendications 4 à 8, caractérisé en ce que le support (6) est pourvu d'un évidement (22) central perpendiculaire à la tôle (20).

10. Dispositif pour découper et souder des ronds de tôle selon la revendication 9, caractérisé en ce qu'une tige de centrage (23) peut être placée dans l'évidement (22), laquelle tige de centrage dépasse la tôle (20) et peut être centrée, en même temps que l'élément de support (42), le cas échéant l'induit (26), notamment par le bas d'un bac collecteur (24).

11. Dispositif pour découper et souder des ronds de tôle selon l'une des revendications 1 à 10, caractérisé en ce qu'au moins un électroaimant (30) supplémentaire et/ou élément de ventouse (35, 35c) supplémentaire peut être situé entre le support (6) et le rond de tôle (31) mis en place.

12. Dispositif pour découper et souder des ronds de tôle selon l'une des revendications 1 à 11, caractérisé en ce que la base (32) est formée d'un matériau ferromagnétique et est pourvue, dans la zone où les soudures sont prévues, d'insertions (33) en cuivre ou matériau similaire qui ne peuvent pas se mélanger au matériau de la soudure.

13. Dispositif pour découper et souder des ronds de tôle selon l'une des revendications 1 à 12, caractérisé en ce que le support (6), notamment le bras (16) du support, est pourvu d'une fixation (17) pour une douille d'excentrique (18) pour une fraise (28), dont l'axe est à peu près perpendiculaire au plan de la tôle.

14. Dispositif pour découper et souder des ronds de tôle selon l'une des revendications 1 à 13, caractérisé en ce que les éléments de ventouse (35, 35a) et/ou électroaimants (2) sont situés dans un profil creux (1) de forme annulaire qui porte un anneau extérieur (9) du palier (8) et, le cas échéant, une couronne dentée (5).

15. Dispositif pour découper et souder des ronds de tôle selon la revendication 14, caractérisé en ce que la couronne dentée (5) est pourvue d'une denture extérieure.

16. Dispositif pour découper et souder des ronds de tôle selon l'une des revendications 1 à 15, caractérisé en ce que les éléments de ventouse (35b) sont formés par le profil creux (1) qui est rendu étanche, avec la tôle, au moyen d'un élément d'étanchéité (38) sur la surface frontale située du côté de la tôle (20).
